# EUROPEAN PATENT SPECIFICATION

(11) **EP 4 458 674 B1**
(45) Date of publication and mention of the grant of the patent: **09.09.2026**
(21) Application number: 24174065.3
(22) Date of filing: 03.05.2024
(51) Int. Cl.: B64D 11/06, B60N 2/02

(54) **AIRCRAFT SEAT SELF ADAPTIVE MOTION CONTROLLER**
SELBSTADAPTIVE BEWEGUNGSSTEUERUNG FÜR EINEN FLUGZEUGSITZ
DISPOSITIF DE COMMANDE DE MOUVEMENT AUTO-ADAPTATIF DE SIÈGE D'AÉRONEF

(30) Priority: 05.05.2023 IN 202311032050; 30.04.2024 US 202418650381
(43) Date of publication of application: 06.11.2024
(73) Proprietor: B/E Aerospace, Inc., Winston-Salem, NC 27105 (US)
(72) Inventor: VENKATA, Suresh Babu Kappa, Bengaluru (IN); ANNUMANDLA, Srikanth, Hyderabad (IN); PROCTOR, Russell C., Advance, NC (US)
(74) Representative: Dehns

(56) References cited:
- CN-A- 108 883 835
- US-A1- 2013 113 250
- US-A1- 2021 380 023
- US-B2- 11 142 095
- US-B2- 9 481 466

## Description

### TECHNICAL FIELD AND BACKGROUND

The present disclosure relates generally to seat motion control, and more particularly, to a system for dynamic seat motion control in real-time based on object detection using external sensors.

US 9 481 466 B2 discloses a system for seat motion control.

Aircraft seats may be highly adjustable, particularly business class and premium class passenger seats. Seat adjustments may be actuator driven. In some cases, highly adjustable seats may include more than a dozen actuators. Adjustable seat elements may include, but are not limited to, the seat pan, backrest, leg rest, armrests, headrest, and lumbar. Each seat element may be segmented to provide further adjustment capability.

Each individual actuator drives element adjustment by rotational and/or linear motion. Actuators may be independent or dependent, wherein an independent actuator operates as a primary driver and a dependent actuator operates considering the operation of its respective independent actuator(s). Actuators may move at different speeds, and may operate separately or in groups to achieve preset sitting positions, for instance upright for taxi, takeoff, and landing (TTOL), and lie-flat during flight, through various intermediate sitting positions.

Motion planning is the process whereby actuators are coordinated to transition the seat between different predefined sitting positions. For example, one motion plan may transition the seat from upright to lie-flat, whereas another motion plan may transition the seat from upright to cradle recline. Motion plans consider the available actuators and their performance capabilities in order to program a plan to transition the seat in a smooth, timely, ergonomic, and orchestrated manner.

In addition to the seat actuators, motion plans must consider the environment in which the seat operates. For example, motion plans must consider surrounding furniture, seat shells, partitions, and other obstacles that may affect the motion path. As the number of actuators and obstacles increases, so does the complexity of the motion plan programming code. In some cases, where a seat includes more than a dozen actuators and the environment includes obstacles, motion planning may require thousands of lines of code requiring weeks to months to create, and increases in complexity with the addition of actuators. Similar time and efforts are also required when seat and environmental changes are made.

Therefore, what is needed is an adaptable, real-time motion controller that obviates the need for laborious and time-consuming programming efforts. US 9481466 B2 relates to a method of and control system for controlling movable components of a powered seat.

### BRIEF SUMMARY

In one aspect, embodiments of the inventive concepts disclosed herein are directed to a system for dynamic seat motion. In embodiments, the system includes a seat including a seat controller, a first actuator for moving a first seat element, and a second actuator for moving a second seat element. The system further includes a first sensor of a first type configured to monitor an environment in which the seat operates, and a second sensor of a second type, different from the first type, configured to monitor the environment in which the seat operates. The system further includes a motion controller communicatively coupled to each of the seat controller, the first sensor, and the second sensor. In embodiments, the motion controller includes a processor configured to access present positions of the first and second actuators corresponding to a present sitting position of the seat, access future positions of the first and second actuators corresponding to a future sitting position of the seat, receive outputs from the first sensor, receive outputs from the second sensor, reconcile the received outputs, and initiate seat motion from the reconciled outputs to be executed by the seat controller to transition the seat from the present sitting position to the future sitting position.

In some embodiments, the motion controller is an element of the seat controller.

In some embodiments, the present sitting position is different from the future sitting position, and the future sitting position is selected by a seat occupant via an interface device of the seat.

In some embodiments, the system further includes a plurality of preprogrammed and predefined sitting positions stored in memory, wherein each of the plurality of predefined sitting positions includes definite actuator positions corresponding to that respective defined sitting position, such that moving the respective actuators to a set of defined positions will position the seat in the corresponding sitting position.

In some embodiments, the first sensor is a millimeter wave (mmWave) radar configured to output to the motion controller a map of an environment in which the seat operates, and the second sensor is a camera configured to output to the motion controller images of the environment in which the seat operates.

In some embodiments, the transition from the present sitting position to the future sitting position is preprogrammed to occur in a predefined time interval, and the seat controller is configured to actuate the first and second actuators, via instructions from the motion controller, to complete the transition from the present sitting position to the future sitting position in the predefined time interval.

In some embodiments, at least one of the first sensor and the second sensor is configured to detect a transient object affecting the dynamic seat motion and modify the same in real-time by changing an operating parameter of at least one of the first and second actuators.

In some embodiments, the operating parameter includes at least one of activation, deactivation, and speed.

In some embodiments, the system further includes at least one additional actuator for moving at least one additional seat element, wherein the motion controller coordinates motions of the first actuator, the second actuator, and the at least one additional actuator to transition the seat from the present sitting position to the future sitting position.

In some embodiments, the first element is a seat pan and the first actuator is an independent actuator, and the second element is a backrest and the second actuator is a dependent actuator.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a block diagram illustrating a system for dynamic seat motion, in accordance with example embodiments of this disclosure;
FIG. 2 is a schematic illustration of a seat environment and dynamic seat motion considering objects and potential entrapment zones in the environment, in accordance with example embodiments of this disclosure;
FIG. 3 is a schematic illustration of the seat environment of FIG. 2 considering human constraints, in accordance with example embodiments of this disclosure;
FIG. 4 is a flow diagram illustrating an example implementation of a method for dynamic seat motion, in accordance with example embodiments of this disclosure;
FIG. 5 is a flow diagram illustrating an example implementation of changes to the dynamic seat motion, in accordance with example embodiments of this disclosure;
FIG. 6 is a graphical illustration of actuator performance for dynamic seat motion, in accordance with example embodiments of this disclosure; and
FIG. 7 is a schematic illustration of the actuator performance of FIG. 6 considering human constraints, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present.

Broadly, embodiments of the inventive concepts disclosed herein are directed to a system for dynamic (e.g., real-time) seat motion and a dynamic seat motion controller. In embodiments, the seat is configured to adjust between predefined sitting positions, for instance upright for taxi, takeoff, and landing (TTOL), lie-flat during flight, and various intermediate sitting positions. The seat includes a plurality of actuators for moving physical seat elements, and for each predefined sitting the associated actuators have definite positions. Actuator positions are known and tracked by the seat controller which is operable for activating the actuators to transition the seat from one sitting position to another sitting position according to dynamic motion instructions from the motion controller as discussed in detail below. The system further includes sensors positioned within the environment configured to detect objects, both fixed and transient.

In use, the motion controller considers the outputs from the sensors and utilizes these outputs to perform dynamic motion in real-time without the need for stored motions plans, way points, position tables, etc. Motions are instructed in real time and are dynamic in that actuator adjustments can be made to account for, for example, transient objects entering and exiting the travel path of a physical seat element. Transitions between different sitting positions (e.g., upright, lie-flat, sleep, dine, etc.) may be programmed to occur within a predefined time interval for smoothness and comfort, and optionally according to a particular sequence. The system further includes sensors of different types configured to monitor the environment in which the seat operates. The sensors may function to map the environment and detect obstacles present in the travel path of the seat in order to control actuator performance in real-time, and modify actuator parameters as necessary.

In embodiments, the seat includes a number of actuators each coupled to at least one seat element. Actuators may be categorized as independent or dependent, wherein independent actuators operate without consideration of another actuator, and dependent actuators operate considering an independent actuator. Actuators may operate synchronously or separately to transition the seat between various predefined sitting positions. In embodiments, the motion controller is configured to detect obstacles and control the actuator performance to complete the transition from one predefined sitting position to another predefined sitting position.

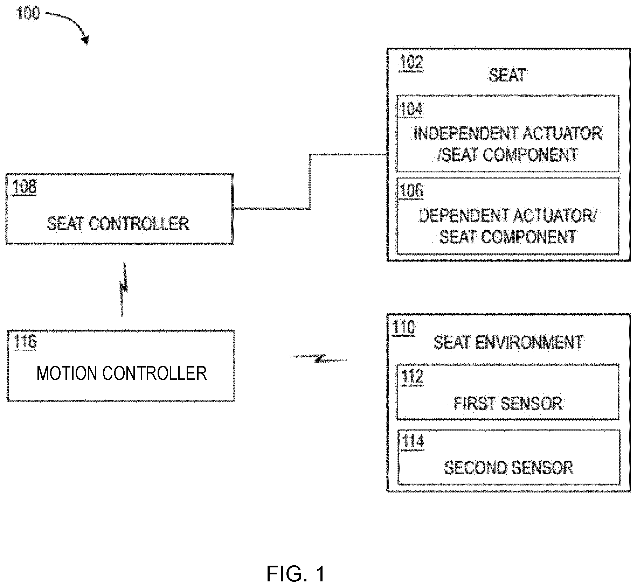

FIG. 1 is a block diagram illustrating a system for dynamic seat motion according to the present disclosure. The system includes a seat 102, for instance a highly adjustable business or premium class passenger seat for an aircraft. The seat includes seat elements such as a seat pan, a backrest, a leg rest, armrests, a headrest, etc. Each seat element may be movable/position adjustable by at least one of rotation, translation, extension, etc. Position changes of the seat elements are achieved using actuators, single or grouped, coupled to the respective seat elements. In embodiments, the actuators may be traditional seat actuators configured to provide linear motion, rotational motion, and combinations thereof.

Each actuator may be categorized as independent or dependent. Independent actuators operate irrespective of any other actuator. In some embodiments, independent actuators 104 are the primary driving members that initiate seat motions, whereas dependent actuators 106 are secondary drivers whose motion depends on the motion of at least one independent actuator. For example, for a seat including a seat pan, backrest, and leg rest, all of which are adjustable, seat pan adjustment may be the primary driver of seat motion and therefore controlled by an independent actuator, whereas backrest and leg rest motions may be dependent on the seat pan motion and therefore controlled by separate dependent actuators. As such, when the seat transitions between different predefined sitting positions, the position of the seat pan may be determinative of the allowable repositioning of the backrest and the leg rest. Actuators may be grouped to coordinate movements of the seat elements. The seat 102 may include any number of independent and dependent actuators and any predefined actuator grouping(s).

The seat 102 is configured to transition between different predefined sitting positions. Each predefined sitting position corresponds to definite actuator positions. For example, for a seat including three actuators A, B and C, first positions of actuators A, B and C may correspond to a first sitting position (e.g., TTOL), whereas second positions of actuators A, B and C may correspond to a second sitting position (e.g., cradle recline), third positions of actuators A, B and C may correspond to a third sitting position (e.g., berthed or lie-flat), and so forth. Thus, the present sitting position of the seat, or a present position of any one of the seat elements, can be determined from the present position of the actuator(s) associated with that particular seat element. As discussed further below, the motion controller according to the present invention operates to access present actuator positions to know a present sitting position, access future actuator positions to know a future sitting position selected by the seat occupant, and execute dynamic motion to achieve a transition from the present sitting position to a next sitting position considering the environment, objects positioned in the motion path of the seat elements, transient objects entering the seat environment, actuator capabilities, and constraints. Predefined sitting positions may be preprogrammed and selected by the passenger, for instance via a position selector provided on an interactive device.

The seat 102 is installable in a seat environment 110, for instance a suite other space in an aircraft passenger cabin. The environment may include objects positioned proximate the seat that may affect the movements of the seat elements, for instance, fixed structures, a seat shell affecting movement of the backrest, an ottoman affecting movement of the leg rest, a side console, a desk, deployable amenities, doors, etc. The seat thus operates in an environment in which obstacles must be considered. Transient obstacles may also enter and leave the seat environment, for instance people and luggage. These obstacles must also be considered as they affect the motion paths of the seat elements. The environment may include various entrapment areas that are monitored. For example, entrapment areas or zones may exist between the backrest and the seat shell, between the leg rest and a forward ottoman, between the side of the seat and a console, etc. Obstacles may enter and leave these entrapment zones, and the presence of such obstacles is also considered.

The system 100 further includes a first sensor 112 of a first type, and a second sensor 114 of a second type. The first and second sensors 112, 114 are positioned in the seat environment. In some embodiments, the first and second sensors 112, 114 are positioned apart/separate from the seat, for instance overhead with respect to the seat such that the field of view of the sensors includes the seat and surrounding environment.

In embodiments, the first sensor 112 may be a millimeter wave (mmWave) radar configured to output a map of an environment in which the seat operates, and the second sensor may be a camera or other vision sensor configured to output images of the environment in which the seat operates. Each of the first and second sensors 112, 114 are operable to continuously monitor the environment for objects and object movements. In some embodiments, the sensors may further monitor the physical seat elements, seat occupant, entrapment areas, etc. In some embodiments, the camera captures frames to determine object and seat element movements.

The system 100 further includes a motion controller 116. In some embodiments, the motion controller 116 is communicatively coupled to each of the seat controller 108, the first sensor 112, and the second sensor 114. In some embodiments, the motion controller 116 may be an element or component of the seat controller 108. In embodiments, the motion controller 116 includes a processor configured to access present positions of seat actuators corresponding to a present sitting position of the seat, access future positions of the seat actuators corresponding to a future sitting position of the seat, receive outputs from the first sensor, receive outputs from the second sensor, reconcile the received outputs, and instruct dynamic motion considering the reconciled outputs to be executed by the seat controller to transition the seat from the present sitting position to the future sitting position. In some embodiments, reconciling may include considering each of the outputs separately or together/fused.

The present sitting position of the seat corresponds to the present seat element positions at the time the seat occupant selects a different predefined sitting position. The future sitting position is the selected sitting position different from the present sitting position. For example, a present sitting position may be an upright sitting position compliant for TTOL, and during flight the seat occupant may wish to change to a different sitting position for more comfort, such as cradle reclined or berthed position for sitting or sleeping depending on the adjustment capabilities of the seat. In embodiments, the system includes a plurality of predefined sitting positions stored in memory, wherein each of the plurality of predefined sitting positions includes definite actuator positions corresponding to that respective defined sitting position. In some embodiments, the transition from the present sitting position to the future sitting position may be preprogrammed to occur in a predefined time interval, for example 10 seconds, to provide a coordinated, smooth, comfortable, and ergonomically correct transition for the seat occupant. The dynamic seat motion controls the necessary actuators to complete the transition from the present sitting position to the future sitting position in the predefined time interval, however, the sequence, speed etc. by which that transition occurs is dynamic considering the environment, objects in the environment, and capabilities of the actuators.

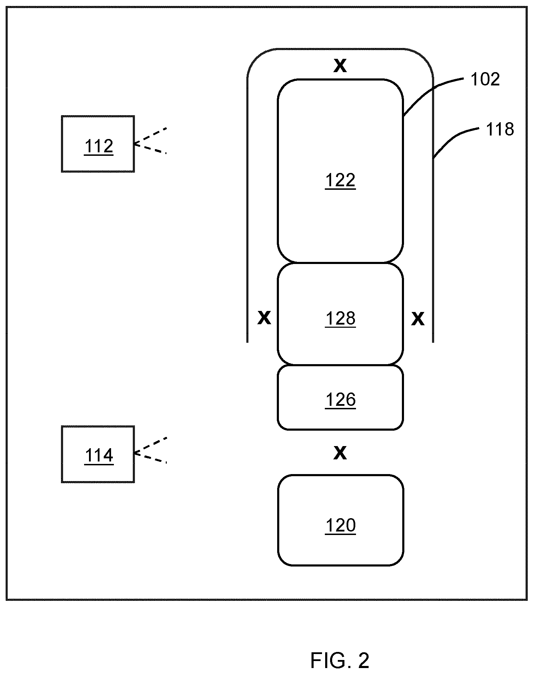

FIG. 2 schematically illustrates a passenger seat 102 operating in an environment including a fixed shell 118 positioned in surrounding relation to the seat 102, and an ottoman 120 positioned forward of the seat 102. In some embodiments, seat elements such as the leg rest 126 and the seat pan 128 may respectively rotate or translate toward the ottoman 120, or the ottoman 120 may be movable toward the seat 102. Possible entrapment areas, indicated at "x", may exist between the fixed shell 118 and the movable backrest 122, between the ottoman 120 and the movable leg rest 126, along the sides of the seat 102, etc. Each of the backrest 122, the leg rest 126, and the seat pan 128 may be movable, independent or synchronously, to achieve different predefined sitting positions. In some embodiments, the seat 102 may include N number of actuators for achieving N degrees of freedom. Outputs from sensors 112, 114 positioned in the environment may be fused to monitor the movements of the various seat elements and the possible entrapment areas.

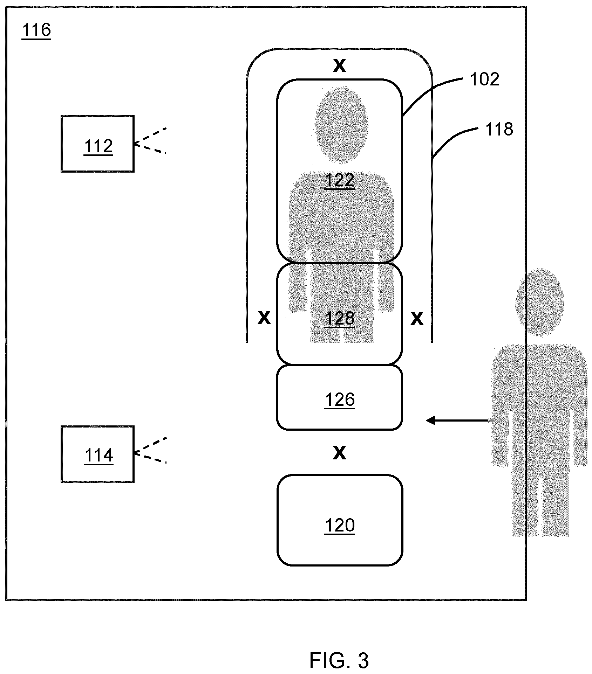

FIG. 3 schematically illustrates the same seat environment shown in FIG. 2 further considering the seat occupant and a transient object, e.g., a person, that may enter and exit the seat environment and affect the travel path of the seat elements. In use, the motion controller 116 is configured to receive, determine, instruct, execute, etc. The motion controller 116 may include at least one processor, memory, and a communication interface. The processor provides processing functionality for at least the motion controller 116 and may include any number of processors, micro-controllers, circuitry, field programmable gate array (FPGA) or other processing systems, and resident or external memory for storing data, executable code, and other information accessed or generated by motion controller 116. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the motion controller 116, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the motion controller 116. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the motion controller 116 and the processor. It should be noted that while the communication interface is described as a component of the motion controller 116, one or more components of the communication interface may be implemented as external components communicatively coupled to the motion controller 116 via a wired and/or wireless connection. The motion controller 116 may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

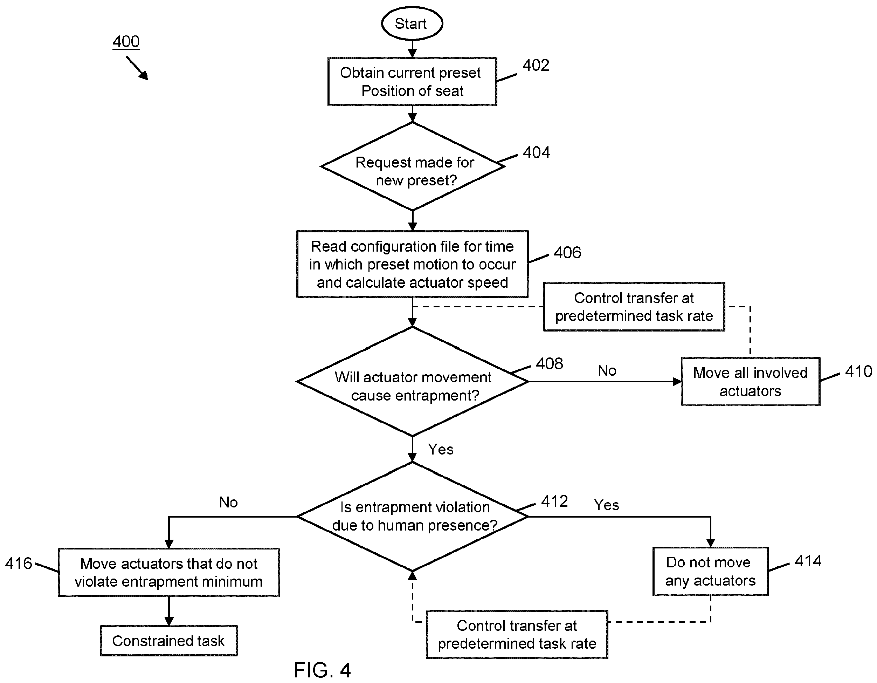

FIG. 4 illustrates a method for dynamic seat motion at 400. It is to be understood that examples of the method disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to, one or more of the steps disclosed herein.

At Step 402, the motion controller is configured to access, for instance from the seat controller, the current or present sitting position as determined by the present actuator positions. At Step 404, a seat occupant requests a new/future sitting position from sitting positions stored in memory. At Step 406, the motion controller accesses the predefined time stored in memory to complete the transition from the present sitting position to the future sitting position in order to calculate the actuator performances needed to complete the transition. At Step 408, the motion controller determines from the monitored environment (e.g., from the sensors) if the actuator motions will cause a collision, entrapment, etc. If no collision or entrapment is determined, at Step 410 the actuators involved with the transition are activated via the seat controller.

At Step 412, the motion controller determines the type of object affecting, or potentially affecting based on its motion trajectory, seat motion. In embodiments, the determination may be human versus non-human, and further determinations can be made. At Step 414, if collision or entrapment determined from the environment involves a human obstacle, all actuators involved with the seat transition may be paused or stopped. At Step 416, if the collision or entrapment determined from the environment involves a non-human obstacle, the movement of the actuators involved with the obstacle may be paused while the movement of the actuators not involved with the obstacle may continue their movements. In embodiments, a goal of the motion controller is to complete the transition within the predetermined time interval by adjusting actuator stops, starts, sequences, speeds, etc. (i.e., performance parameters) to accommodate objects affecting seat components motions, while completing the transition in a smooth, comfortable, and ergonomic manner for the seat occupant.

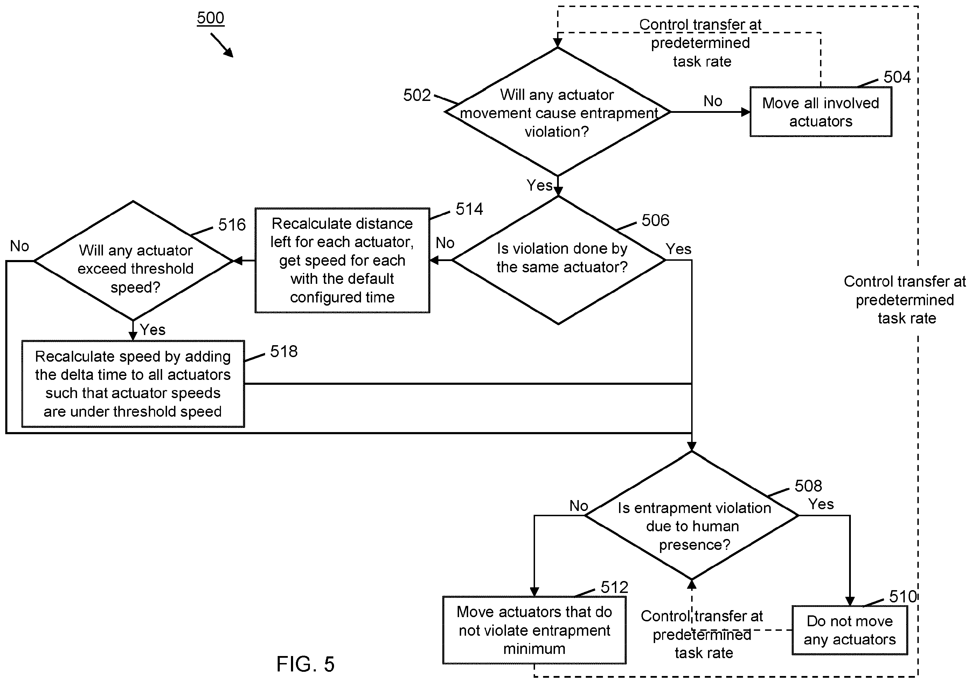

FIG. 5 illustrates a method 500 for adjusting actuator performance considering the capabilities of the actuators, type of object, continued presence of objects, etc. At Step 502, the motion controller determines from the environment if any actuator motion will cause an entrapment violation. At Step 504, if the motion controller determines that no actuator motion will result in an entrapment violation then all actuators involved in the sitting position transition can be allowed to perform/continue their motions. At Step 506, if the motion controller determines that an actuator motion will result in an entrapment violation, the involved actuator is determined. At Step 508 the motion controller determines if the obstacle affecting motion is human (e.g., limb in an entrapment area, visitor walking into the travel path of seat motion, etc.). At Step 510, a determined human obstacle may cause the motion controller to stop all actuator motions for safety. At Step 512, an obstacle determined to not be human may cause the motion controller to stop motions of the obstacle-involved actuators while continuing motions of the uninvolved actuators.

Referring again to Step 506, for the actuators not involved with the violation, at Step 514 the movement remaining for each actuator to complete the seat transition is recalculated and the actuator speed is adjusted to accommodate for the paused actuators. At Step 516, the motion controller is further configured to determine if any actuator speed, e.g., restarted actuator moving to 'catch up' with other actuators, would exceed any predefined speed threshold. If no speed threshold is determined to be exceeded then the transition continues. If a threshold speed is anticipated to be exceeded to complete the motion, then at Step 518 the motion controller will determine the extra time needed for the lagging actuators to 'catch up' and apply that delta time to all actuators such that each actuator speed is under a predefined threshold speed.

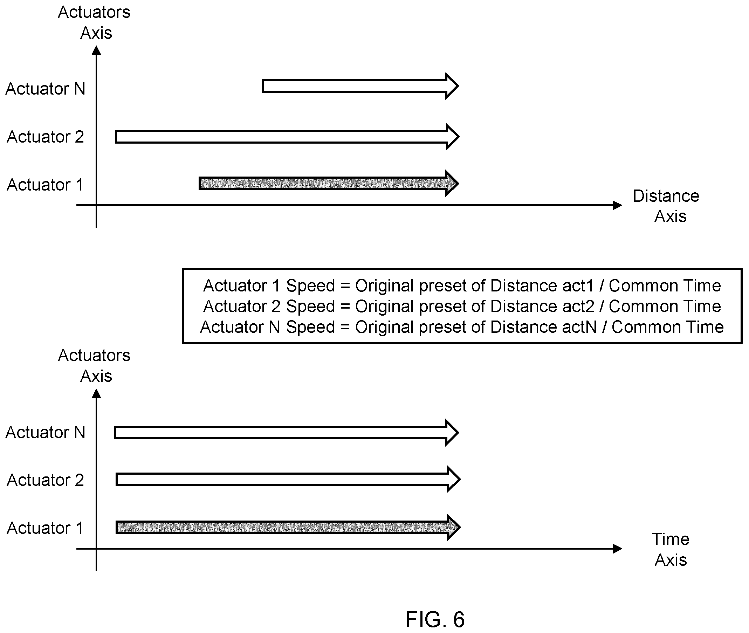

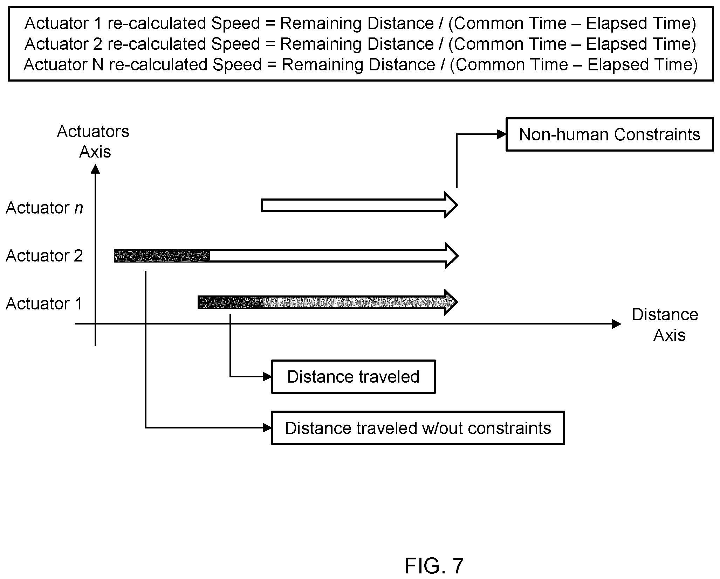

FIG. 6 illustrates graphically different actuators and the performances and run times to complete a transition from a present sitting position to a future sitting position. FIG. 7 illustrates graphically adjustments made to the actuators in FIG. 6 to account for detected objects in the environment, for instance a human presence in an entrapment area. Comparing FIGS. 6 and 7, for the actuators involved in transitioning the seat, the speeds of some actuators may be adjusted based on delays of other actuators resulting from objects delaying their motions. Speed changes can thus be applied to resume a seat motion that is smooth and comfortable to the passenger.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made as long as they fall within the scope of the appended claims.

## Claims

1. A system for seat motion control, comprising:
a seat (102) including a seat controller (108), a first actuator (104, 106) for moving a first seat element (120, 122, 126, 128), and a second actuator (104, 106) for moving a second seat element (120, 122, 126, 128);
a first sensor (112) of a first type configured to monitor an environment (110) in which the seat operates;
a second sensor (114) of a second type, different from the first type, configured to monitor the environment in which the seat operates; and
a motion controller (116) communicatively coupled to each of the seat controller, the first sensor, and the second sensor, the motion controller including a processor configured to:
access, from the seat controller, present positions of the first and second actuators corresponding to a present sitting position of the seat;
access, from memory, future positions of the first and second actuators corresponding to a future sitting position of the seat;
receive outputs from the first sensor;
receive outputs from the second sensor;
reconcile the outputs received from the first and second sensors; and
instruct seat motion, from the reconciled outputs and via the seat controller and first and second actuators, to transition the seat from the present sitting position to the future sitting position.

2. The system according to claim 1, wherein the motion controller (116) is an element of the seat controller (108).

3. The system according to any preceding claim, wherein the present sitting position is different from the future sitting position, and the future sitting position is selected by a seat occupant via an interface device of the seat.

4. The system according to any preceding claim, comprising a plurality of predefined sitting positions stored in memory, wherein each of the plurality of predefined sitting positions includes definite actuator positions corresponding to that respective defined sitting position.

5. The system according to any preceding claim, wherein the first sensor is a millimeter wave, mmWave, radar configured to output to the motion controller a map of an environment in which the seat operates, and the second sensor is a camera configured to output to the motion controller images of the environment in which the seat operates.

6. The system according to any preceding claim, wherein the transition from the present sitting position to the future sitting position is preprogrammed to occur in a predefined time interval, and the motion controller (116) is configured to instruct the seat controller (108) to complete the transition from the present sitting position to the future sitting position within the predefined time interval.

7. The system according to any preceding claim, wherein at least one of the first sensor and the second sensor (112, 114) is configured to detect a transient object affecting the seat motion and modify the seat motion in real-time by changing an instruction corresponding to an operating parameter of at least one of the first and second actuators (104, 106).

8. The system according to claim 7, wherein the operating parameter includes at least one of activation, deactivation, and speed.

9. The system according to any preceding claim, further comprising at least one additional actuator (104, 106) for moving at least one additional seat element (120, 122, 126, 128), wherein the motion controller is configured to coordinate the first actuator, the second actuator, and the at least one additional actuator to transition the seat from the present sitting position to the future sitting position.

10. The system according to any preceding claim, wherein the first seat element is a seat pan (128) and the first actuator is an independent actuator (104), and the second seat element is a backrest (122) and the second actuator is a dependent actuator (106).

## Patentansprüche

1. System zur Sitzbewegungssteuerung, umfassend:
einen Sitz (102), der eine Sitzsteuerung (108), einen ersten Aktuator (104, 106) zum Bewegen eines ersten Sitzelements (120, 122, 126, 128) und einen zweiten Aktuator (104, 106) zum Bewegen eines zweiten Sitzelements (120, 122, 126, 128) umfasst;
einen ersten Sensor (112) eines ersten Typs, der dazu konfiguriert ist, eine Umgebung (110) zu überwachen, in der der Sitz betrieben wird;
einen zweiten Sensor (114) eines zweiten Typs, der sich von dem ersten Typ unterscheidet und dazu konfiguriert ist, die Umgebung zu überwachen, in der der Sitz betrieben wird; und
eine Bewegungssteuerung (116), die kommunikativ mit jedem von der Sitzsteuerung, dem ersten Sensor und dem zweiten Sensor gekoppelt ist, wobei die Bewegungssteuerung einen Prozessor umfasst, der dazu konfiguriert ist:
über die Sitzsteuerung auf gegenwärtige Positionen des ersten und zweiten Aktuators zuzugreifen, die einer gegenwärtigen Sitzposition des Sitzes entsprechen;
aus einem Speicher auf zukünftige Positionen des ersten und zweiten Aktuators zuzugreifen, die einer zukünftigen Sitzposition des Sitzes entsprechen;
Ausgaben von dem ersten Sensor zu empfangen;
Ausgaben von dem zweiten Sensor zu empfangen;
die von dem ersten und dem zweiten Sensor empfangenen Ausgaben abzugleichen; und
auf der Grundlage der abgeglichenen Ausgaben und über die Sitzsteuerung und den ersten und zweiten Aktuator eine Sitzbewegung anzuweisen, um den Sitz von der gegenwärtigen Sitzposition in die zukünftige Sitzposition zu überführen.

2. System nach Anspruch 1, wobei die Bewegungssteuerung (116) ein Element der Sitzsteuerung (108) ist.

3. System nach einem der vorhergehenden Ansprüche, wobei die gegenwärtige Sitzposition von der zukünftigen Sitzposition verschieden ist und die zukünftige Sitzposition von einem Sitzinsassen über eine Schnittstellenvorrichtung des Sitzes ausgewählt wird.

4. System nach einem der vorhergehenden Ansprüche, umfassend eine Vielzahl von in einem Speicher gespeicherten vordefinierten Sitzpositionen, wobei jede der Vielzahl von vordefinierten Sitzpositionen bestimmte Aktuatorpositionen umfasst, die dieser jeweiligen definierten Sitzposition entsprechen.

5. System nach einem der vorhergehenden Ansprüche, wobei der erste Sensor ein Millimeterwellenradar (mmWave-Radar) ist, das dazu konfiguriert ist, an die Bewegungssteuerung eine Karte einer Umgebung auszugeben, in der der Sitz betrieben wird, und der zweite Sensor eine Kamera ist, die dazu konfiguriert ist, an die Bewegungssteuerung Bilder der Umgebung auszugeben, in der der Sitz betrieben wird.

6. System nach einem der vorhergehenden Ansprüche, wobei der Übergang von der gegenwärtigen Sitzposition in die zukünftige Sitzposition so vorprogrammiert ist, dass er in einem vordefinierten Zeitintervall erfolgt, und die Bewegungssteuerung (116) dazu konfiguriert ist, die Sitzsteuerung (108) anzuweisen, den Übergang von der gegenwärtigen Sitzposition in die zukünftige Sitzposition innerhalb des vordefinierten Zeitintervalls abzuschließen.

7. System nach einem der vorhergehenden Ansprüche, wobei mindestens einer von dem ersten Sensor und dem zweiten Sensor (112, 114) dazu konfiguriert ist, ein vorübergehendes Objekt zu erfassen, das die Sitzbewegung beeinflusst, und die Sitzbewegung in Echtzeit zu modifizieren, indem eine Anweisung geändert wird, die einem Betriebsparameter mindestens eines von dem ersten und dem zweiten Aktuator (104, 106) entspricht.

8. System nach Anspruch 7, wobei der Betriebsparameter mindestens eines von Aktivierung, Deaktivierung und Geschwindigkeit umfasst.

9. System nach einem der vorhergehenden Ansprüche, ferner umfassend mindestens einen zusätzlichen Aktuator (104, 106) zum Bewegen mindestens eines zusätzlichen Sitzelements (120, 122, 126, 128), wobei die Bewegungssteuerung dazu konfiguriert ist, den ersten Aktuator, den zweiten Aktuator und den mindestens einen zusätzlichen Aktuator zu koordinieren, um den Sitz von der gegenwärtigen Sitzposition in die zukünftige Sitzposition zu überführen.

10. System nach einem der vorhergehenden Ansprüche, wobei das erste Sitzelement eine Sitzwanne (128) und der erste Aktuator ein unabhängiger Aktuator (104) ist und das zweite Sitzelement eine Rückenlehne (122) und der zweite Aktuator ein abhängiger Aktuator (106) ist.

## Revendications

1. Système de commande de mouvement de siège, comprenant :
un siège (102) comportant un dispositif de commande de siège (108), un premier actionneur (104, 106) pour déplacer un premier élément de siège (120, 122, 126, 128) et un second actionneur (104, 106) pour déplacer un second élément de siège (120, 122, 126, 128) ;
un premier capteur (112) d'un premier type configuré pour surveiller un environnement (110) dans lequel le siège fonctionne ;
un second capteur (114) d'un second type, différent du premier type, configuré pour surveiller l'environnement dans lequel le siège fonctionne ; et
un dispositif de commande de mouvement (116) accouplé en communication avec chacun du dispositif de commande de siège, du premier capteur et du second capteur, le dispositif de commande de mouvement comportant un processeur configuré pour :
accéder, à partir du dispositif de commande de siège, aux positions actuelles des premier et second actionneurs correspondant à une position d'assise actuelle du siège ;
accéder, à partir de la mémoire, aux positions futures des premier et second actionneurs correspondant à une position d'assise future du siège ;
recevoir les données en sortie du premier capteur ;
recevoir les données en sortie du second capteur ;
concilier les données en sortie reçues en provenance des premier et second capteurs ; et
commander le mouvement du siège, à partir des données en sortie conciliées et par l'intermédiaire du dispositif de commande de siège et des premier et second actionneurs, pour faire passer le siège de la position d'assise actuelle à la position d'assise future.

2. Système selon la revendication 1, dans lequel le dispositif de commande de mouvement (116) est un élément du dispositif de commande de siège (108).

3. Système selon une quelconque revendication précédente, dans lequel la position d'assise actuelle est différente de la position d'assise future, et la position d'assise future est sélectionnée par un occupant de siège par l'intermédiaire d'un dispositif d'interface du siège.

4. Système selon une quelconque revendication précédente, comprenant une pluralité de positions d'assise prédéfinies stockées en mémoire, dans lequel chacune de la pluralité de positions d'assise prédéfinies comporte des positions d'actionneur définies correspondant à cette position d'assise définie respective.

5. Système selon une quelconque revendication précédente, dans lequel le premier capteur est un radar à ondes millimétriques (mmWave) configuré pour délivrer au dispositif de commande de mouvement une carte d'un environnement dans lequel le siège fonctionne, et le second capteur est une caméra configurée pour délivrer au dispositif de commande de mouvement des images de l'environnement dans lequel le siège fonctionne.

6. Système selon une quelconque revendication précédente, dans lequel le passage de la position d'assise actuelle à la position d'assise future est préprogrammée pour se produire dans un intervalle de temps prédéfini, et le dispositif de commande de mouvement (116) est configuré pour ordonner au dispositif de commande de siège (108) d'effectuer le passage de la position d'assise actuelle à la position d'assise future pendant l'intervalle de temps prédéfini.

7. Système selon une quelconque revendication précédente, dans lequel au moins l'un parmi le premier capteur et le second capteur (112, 114) est configuré pour détecter un objet transitoire affectant le mouvement du siège et modifier le mouvement du siège en temps réel en changeant une instruction correspondant à un paramètre de fonctionnement d'au moins l'un parmi les premier et second actionneurs (104, 106).

8. Système selon la revendication 7, dans lequel le paramètre de fonctionnement comporte au moins l'une parmi l'activation, la désactivation et la vitesse.

9. Système selon une quelconque revendication précédente, comprenant en outre au moins un actionneur supplémentaire (104, 106) pour déplacer au moins un élément de siège supplémentaire (120, 122, 126, 128), dans lequel le dispositif de commande de mouvement est configuré pour coordonner le premier actionneur, le second actionneur et l'au moins un actionneur supplémentaire afin de faire passer le siège de la position d'assise actuelle à la position d'assise future.

10. Système selon une quelconque revendication précédente, dans lequel le premier élément de siège est un baquet de siège (128) et le premier actionneur est un actionneur indépendant (104), et le second élément de siège est un dossier (122) et le second actionneur est un actionneur dépendant (106).
